# FASCICULE DE BREVET EUROPEEN

(11) **EP 1 612 101 B1**
(45) Date de publication et mention de la délivrance du brevet: **07.05.2008**
(21) Numéro de dépôt: 05104058.2
(22) Date de dépôt: 16.05.2005
(51) Int. Cl.: B60Q 1/14, H01H 25/04

(54) **Commutateur électrique notamment pour véhicule automobile**
Elektrischer Schalter insbesondere für ein Kraftfahrzeug
Electrical switch especially for an automotive vehicle

(30) Priorité: 30.06.2004 FR 0407206
(43) Date de publication de la demande: 04.01.2006
(73) Titulaire: SC2N, 94017 Créteil (FR)
(72) Inventeur: Rollet, Gérard, 14840 Demouville (FR)
(74) Mandataire: Croonenbroek, Thomas Jakob

(56) Documents cités:
- EP-B- 1 008 158
- DE-A1- 10 056 663
- US-A- 4 293 743
- US-A- 6 103 980
- US-A1- 2003 019 731
- US-B1- 6 399 905

## Description

La présente invention concerne le domaine des commutateurs électriques.

La présente invention trouve notamment, mais non exclusivement, application dans la réalisation de commutateurs électriques pour véhicules automobiles, notamment pour commutateurs destinés à être fixés en haut de colonne de direction, sous volant.

De nombreux commutateurs électriques sont connus.

Un exemple classique de commutateur est décrit par exemple dans le document FR-2747834.

Comme décrit dans ce document, on connaît en particulier de nombreux commutateurs électriques comprenant une pièce métallique souple déplacée en regard de pistes électriquement conductrices portées par un circuit imprimé ou équivalent, pour modifier l'état de liaison de celles-ci.

La présente invention a maintenant pour but de proposer un nouveau commutateur électrique présentant des performances supérieures à celles des commutateurs antérieurs connus.

Ce but est atteint dans le cadre de la présente invention grâce à un commutateur électrique comprenant un support qui porte un ensemble de pistes électriquement conductrices, par exemple sous forme de circuit imprimé, et une pièce de contactage comprenant au moins une languette principale apte à reposer en permanence contre le support pour modifier l'état de liaison de pistes portées par celui-ci quand la pièce est déplacée dans un plan généralement parallèle au support et au moins une languette secondaire placée dans un plan différent de la languette principale et adaptée pour être portée au contact d'une piste portée par le support quand ladite pièce est déplacée dans un plan généralement perpendiculaire au support.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'une pièce de contact conforme à la présente invention,
- la figure 2 représente une vue en perspective d'un sous ensemble du commutateur électrique conforme à la présente invention incorporant la pièce de contact précitée,
- la figure 3 représente une vue latérale du même sous ensemble, en position de repos,
- la figure 4 représente une vue similaire partielle du même sous ensemble illustrant la position de la pièce de contact au repos,
- la figure 5 représente une vue similaire à la figure 4 illustrant la position de la pièce de contact dans une première position de travail,
- la figure 6 représente une seconde vue latérale du même sous ensemble selon une vue opposée à la figure 3, en position de repos,
- la figure 7 représente une vue similaire partielle de la figure 6 illustrant la position de la pièce de contact au repos,
- la figure 8 représente une vue similaire à la figure 7 dans une seconde position de travail de la pièce de contact, et

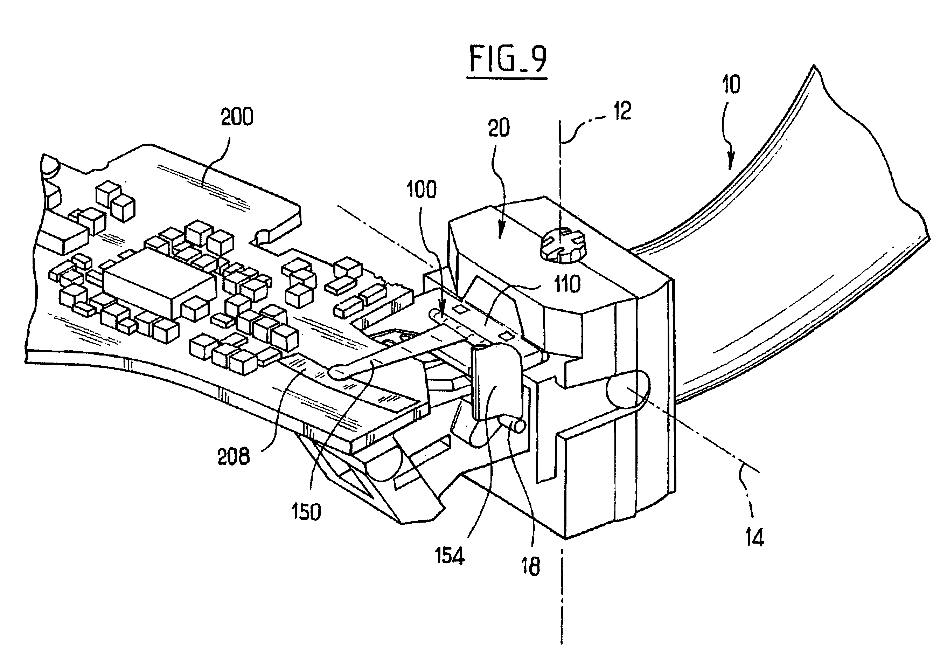

- la figure 9 représente une autre vue en perspective du sous ensemble de commutateur conforme à la présente invention.

Le sous ensemble de commutateur conforme à la présente invention illustré sur les figures annexées comprend une manette de commande 10, une pièce de commande 20, une pièce de contactage 100 et un circuit imprimé 200.

La manette 10 est avantageusement réalisée à base de matière plastique. Elle est montée à rotation autour de deux axes 12, 14, orthogonaux entre eux et généralement orthogonaux à la direction longitudinale de la manette 10.

La pièce de com mande 20 est également réalisée avantageusement en matière plastique. Elle est portée par la manette 10. Plus précisément encore, la pièce de commande 20 est liée à la manette 10 lorsque celle-ci est entraînée à rotation autour de l'axe 12. En revanche, la pièce de commande 20 est libre de débattement angulaire, au moins sur une plage donnée, lorsque la manette de commande 10 est entraînée à rotation autour de l'axe 14. En d'autres termes, la pièce de commande 20 accompagne la manette 10 dans son mouvement de rotation autour de l'axe 12. En revanche, la pièce de commande 20 reste fixe lorsque la manette de commande 10 est entraînée à rotation autour de l'axe 14.

La pièce de commande 20 porte la pièce de contactage 100.

Cette pièce de contactage 100 est monobloc. Elle est réalisée en matériau électriquement conducteur, de préférence en métal, par exemple du bronze béryllium. La pièce de contactage 100 est formée avantageusement à partir d'un flanc plan découpé et plié.

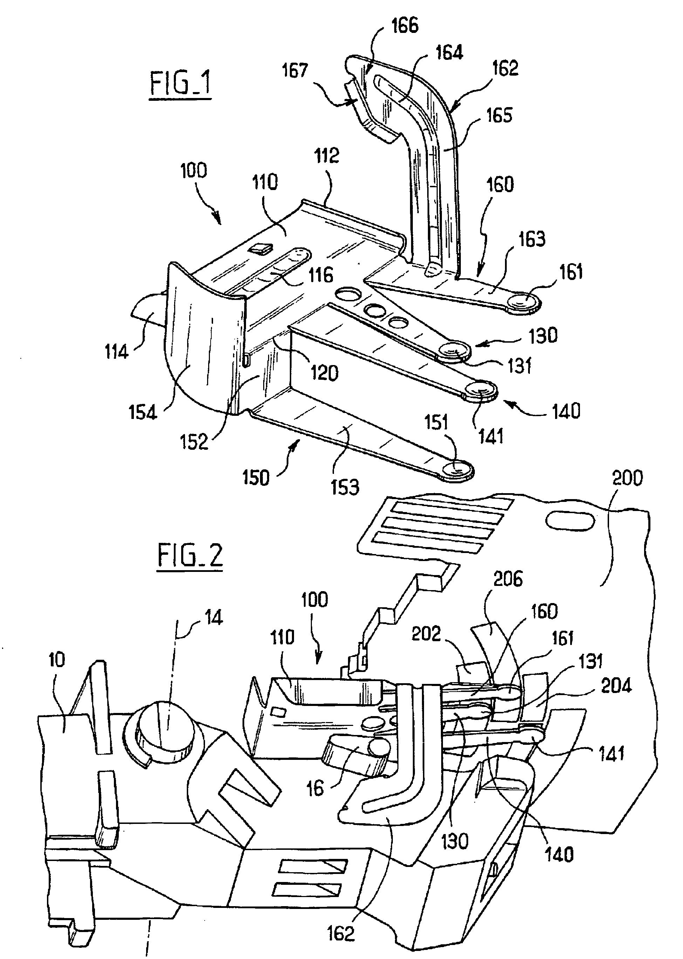

Plus précisément, comme on le voit notamment sur la figure 1, la pièce de contactage 100 comprend une platine 110 de contour général rectangulaire, généralement plane. La platine 110 est incurvée en 112, 114, sur deux bords latéraux parallèles, et possède une nervure généralement centrale 116 orthogonale aux bords latéraux 112, 114 précités. Les incurvations 112, 114 et le pli central 116 assurent la rigidification de la platine 110.

Les incurvations 112, 114 et la nervure 116 peuvent également participer au maintien de la pièce 100 sur la pièce de commande 20.

La platine 110, porte sur un bord 120 rectiligne perpendiculaire aux bords latéraux 112, 114 précités, au moins une languette principale et au moins une languette secondaire.

Plus précisément encore, selon le mode de réalisation particulier préférentiel représenté sur les figures annexées, le bord 120 de la platine 110 porte deux languettes principales 130, 140 et deux languettes secondaires 150, 160.

Chacune de ces languettes 130, 140, 150, 160, se termine par un lobe d'extrémité 131, 141, 151, 161, conformé en calotte sphérique adapté pour coopérer avec une piste électriquement conductrice 202, 204, 206, 208 portée par le circuit imprimé 200.

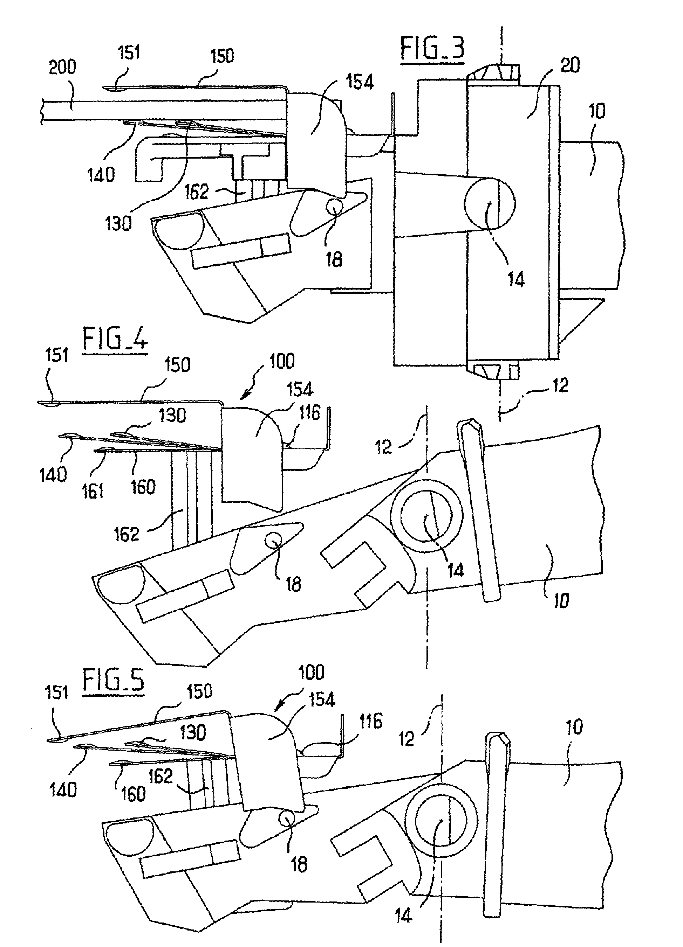

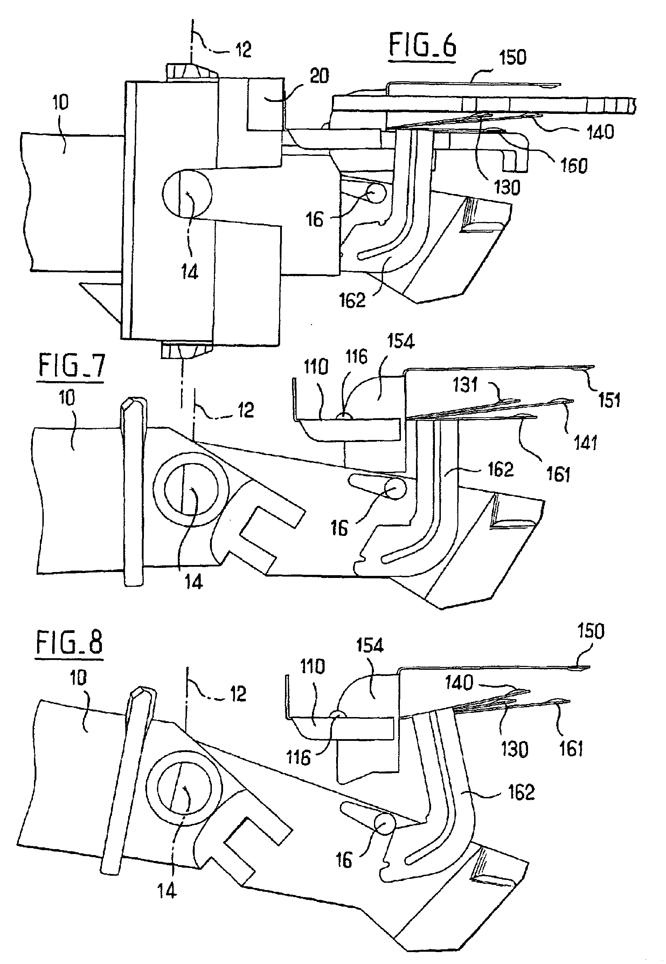

Les languettes principales 130, 140, peuvent être coplanaires de la platine 10, en position de repos. Cependant, de préférence, ces languettes principales 130, 140 sont inclinées par rapport au plan moyen de la platine 100, comme on le voit par exemple sur les figures 4 et 7. Leurs extrémités formées par les lobes 131, 141 sont quant à elles généralement coplanaires et reposent en permanence contre le circuit imprimé 200 afin de modifier l'état de liaison des pistes 202, 204 portées par celui-ci.

Une languette secondaire 160 est globalement coplanaire de la platine 100. Son lobe d'extrémité 161 est situé au repos dans un plan différent de celui des languettes principales précitées 130, 140. En conséquence, au repos, comme on le voit sur les figures 4 et 7 par exemple, la languette 160 est distante du circuit imprimé 200. Cette languette 160 porte un flasque latéral 162 formé par pliage perpendiculairement au plan moyen de la languette 160. Le flasque 162 se raccorde sur un bord longitudinal 163 de la languette 160.

Le flasque 162 possède une nervure de raidissement centrale 164.

Le flasque 162 a la forme générale d'un L. Une première branche 165 raccordée sur le bord longitudinal 163 de la languette 160 s'étend perpendiculairement au plan moyen de la languette 160 et de la platine 110. La seconde branche 166, d'extrémité, s'étend perpendiculairement au plan moyen de la languette 160, en direction de la platine 110. Cette extrémité 166 peut posséder elle-même sur son bord latéral dirigé vers la platine 110 une ailette 167 formée par pliage à 90°. Le flasque 162 plus précisément par son extrémité 166, est adapté pour coopérer avec une came 16 portée par l'extrémité de la manette 10.

L'homme de l'art comprendra à l'examen comparé des figures 7 et 8 que lorsque la manette 10 est entraînée à rotation autour de l'axe 14, dans le sens des aiguilles d'une montre selon la représentation des figures 7 et 8, la came 16 vient solliciter l'extrémité 166 du flasque 162 et entraîne ainsi à pivotement la languette secondaire 160, dans le sens contraire des aiguilles d'une montre selon la représentation des figures 7 et 8, par rotation autour d'une zone charnière correspondant à la zone de liaison de la languette secondaire 160 sur le bord 120 de la platine 110.

A cette occasion, le lobe d'extrémité 161 de la languette 160 peut venir contacter une piste complémentaire 206 portée par le circuit imprimé 200 sur la même face que les pistes 202, 204.

La languette 160 revient élastiquement en position de repos éloignée du circuit imprimé 200 lorsque la manette 10 est relâchée et revient elle-même en position de repos.

On notera que lors du déplacement de la languette 160, les languettes principales 130, 140 restent en contact avec les pistes 202, 204. Ainsi, la rotation de la manette 10 autour de l'axe 14 peut être accompagnée d'une rotation simultanée de la même manette 10 autour de l'axe 12, les languettes principales 130, 140 restant actives.

La seconde languette secondaire 150 a la forme générale d'un L raccordée également sur le bord 120 de la platine 110.

La première branche 152 de la languette secondaire 150 s'étend perpendiculairement au plan moyen de la platine 110. La seconde branche 153, qui porte à son extrémité le lobe de contact 151 s'étend parallèlement au plan moyen de la platine 110.

Le lobe 151 est ainsi situé dans un plan différent des languettes 130, 140, 160 et plus précisément de leurs lobes 131, 141, 161. Ainsi, au repos, le lobe 151 est situé sur le côté du circuit imprimé 200 opposé à celui portant les pistes 202, 204, 206 précitées. Par ailleurs, au repos comme on le voit sur les figures annexées, le lobe 151 de contact est distant du circuit imprimé 200.

La languette secondaire 150 porte également un flasque de sollicitation 154. Celui-ci est formé par pliage à 90° à partir d'un bord longitudinal de la première branche 152 de la languette secondaire 150. Le flasque 154 est adapté pour coopérer comme on le voit sur les figures 3 à 5 avec une seconde came 18 portée par l'extrémité de la manette 10.

Lorsque la manette 10 est entraînée à rotation dans le sens des aiguilles d'une montre selon la représentation des figures 4 et 5 (c'est-à-dire dans le sens inverse des aiguilles d'une montre selon la représentation des figures 7 et 8 visées précédemment) la came 18 vient solliciter le flasque 154 pour entraîner à pivotement la languette secondaire 150 par pivotement dans le sens contraire des aiguilles d'une montre selon la représentation donnée sur les figures 4 et 5 de sorte que le lobe d'extrémité 151 de cette languette secondaire vienne contacter une piste électriquement conductrice 208 portée par la seconde face du circuit imprimé 200.

Cette rotation de la languette secondaire 150 est opérée par pivotement autour d'une zone charnière qui correspond à la zone de liaison de la languette secondaire 150 sur le bord 120 de la platine 110.

Comme la languette 160 précitée, la languette 150 revient d'elle-même en position de repos éloignée du circuit imprimé 200, grâce à son élasticité intrinsèque lorsque la manette 10 est relâchée et ramenée elle-même en position de repos.

On notera que là encore, le pivotement de la manette 10 autour de l'axe 14 peut être accompagné d'un pivotement simultané de la manette 10 autour de l'axe 12, les languettes principales 130, 140 restant en contact avec les pistes 202 et 204 et restant donc actives.

Les moyens de commutation électriques conforme à la présente invention qui viennent d'être décrits peuvent être utilisés pour assurer toute commande, notamment sur véhicules automobiles, par exemple des commandes d'appels phare ou de commandes de lavage/essuyage, voir de commandes d'indicateurs lumineux ou sonores.

L'homme de l'art comprendra que les moyens proposés dans le cadre de la présente invention conduisent à un commutateur électrique simple, économique et précis.

## Revendications

1. Commutateur électrique comprenant un ensemble de pistes électriquement conductrices (202, 204, 206, 208) portées par un support commun (200) et une pièce de contact (100) comprenant au moins une languette principale (130, 140) apte à reposer en permanence contre le support pour modifier l'étape de liaison des pistes électriquement conductrices (202, 204) portées par celui-ci quand la pièce est sollicitée en déplacement dans un plan généralement parallèle au support (200) **caractérisé en ce que** la pièce de contact (100) comporte en outre au moins une languette secondaire (150, 160) placée dans un plan différent de la languette principale (130, 140) et adaptée pourêtre portée au contact d'une piste (206, 208) portée par le support (200) quand la pièce (100) est sollicitée dans un plan généralement perpendiculaire au support (200).

2. Commutateur selon la revendication 1, **caractérisé par le fait qu**'il comprend une manette (10) susceptible de pivotement autour de deux axes orthogonaux (12,14) et une pièce de commande (20) portée par la manette (10), qui supporte elle-même la pièce de contact (100), et qui est liée avec la manette (10) lors de la rotation de celle-ci autour d'un axe (12) tout en étant susceptible de débattement angulaire par rapport à la manette (10) lors d'une rotation de celle-ci autour d'un second axe orthogonal (14).

3. Commutateur selon la revendication 2, **caractérisé par le fait que** la pièce de commande (20) est réalisée en matériau thermoplastique.

4. Commutateur selon l'une des revendications 1 à 3, **caractérisé par le fait que** la pièce de contact (100) est monobloc et réalisée par découpe et pliage d'un flanc métallique.

5. Commutateur selon l'une des revendications 1 à 4, **caractérisé par le fait que** la pièce de contact (100) possède une platine (110) comportant des nervures de rigidification (112, 114, 116).

6. Commutateur selon l'une des revendications 1 à 5, **caractérisé par le fait qu**'il comprend deux languettes principales (130, 140).

7. Commutateur selon l'une des revendications 1 à 6, **caractérisé par le fait qu**'il comprend au moins une languette principale (130, 140) dont le plan moyen est incliné par rapport à une platine de base de la pièce de contact (100).

8. Commutateur selon l'une des revendications 1 à 7, **caractérisé par le fait que** chaque languette (130, 140, 150, 160) se termine par un lobe de contact (131, 141, 151 , 161) formé d'une calotte sphérique.

9. Commutateur selon l'une des revendications 1 à 8, **caractérisé par le fait qu**'il comprend deux languettes secondaires (150, 160).

10. Commutateur selon l'une des revendications 1 à 9, **caractérisé par le fait que** chaque languette secondai re (150, 160) possède un flasque de commande latéral (154, 162).

11. Commutateur selon la revendication 10, **caractérisé par le fait que** les flasques de commande latéraux sont formés par pliage d'une pièce raccordée sur un bord longitudinal de chaque languette secondaire (150,160).

12. Commutateur selon l'une des revendications 1 à 11, **caractérisé par le fait qu**'une languette secondaire (160) possède un flasque latérale de com mande (162) en forme de L.

13. Commutateur selon l'une des revendications 1 à 12, **caractérisé par le fait que** la manette de commande (10) possède au moins une came (16, 18) apte à solliciter une languette secondaire (150, 160) associée.

14. Commutateur selon l'une des revendications 1 à 13, **caractérisé par le fait que** la manette (10) possède deux cames de commande (16,18) aptes à solliciter respectivement l'une de deux languettes secondaires (150, 160).

## Claims

1. Electrical switch comprising a set of electrically conducting tracks (202, 204, 206, 208) borne by a shared support (200) and a contact piece (100) comprising at least one main tongue (130, 140) able to rest permanently against the support to modify the state of connection of the electrically conducting tracks (202, 204) borne thereby when the piece is displaced in a plane generally parallel to the support (200), **characterized in that** the contact piece (100) comprises in addition at least one secondary tongue (150, 160) placed in a different plane from the main tongue (130, 140) and adapted to be borne in contact with a track (206, 208) borne by the support (200) when the piece (100) is acted upon in a plane generally perpendicular to the support (200).

2. Switch according to Claim 1, **characterized in that** it comprises a lever (10) able to pivot about two orthogonal axes (12, 14) and a control part (20) borne by the lever (10) which control part itself supports the contact piece (100) and is connected to the lever (10) during the rotation of this about an axis (12) while being capable of angular travel relative to the lever (10) when this is rotated about a second orthogonal axis (14).

3. Switch according to Claim 2, **characterized in that** the control piece (20) is made of a thermoplastic material.

4. Switch according to one of Claims 1 to 3, **characterized in that** the contact piece (100) is a single piece and made by cutting and folding a metal blank.

5. Switch according to any one of Claims 1 to 4, **characterized in that** the contact piece (100) has a plate (110) comprising strengthening ribs (112, 114, 116) .

6. Switch according to any one of Claims 1 to 5, **characterized in that** it comprises two main tongues (130, 140).

7. Switch according to any one of Claims 1 to 6, **characterized in that** it comprises at least one main tongue (130, 140), the mean plane of which is inclined relative to a base plate of the contact piece (100).

8. Switch according to one of Claims 1 to 7, **characterized in that** each tongue (130, 140, 150, 160) terminates with a contact lobe (131, 141, 151, 161) formed by a spherical cap.

9. Switch according to one of Claims 1 to 8, **characterized in that** it comprises two secondary tongues (150, 160).

10. Switch according to one of Claims 1 to 9, **characterized in that** each secondary tongue (150, 160) has a lateral control endplate (154, 162).

11. Switch according to Claim 10, **characterized in that** the lateral control endplates are formed by folding a connected piece along a longitudinal edge of each secondary tongue (150, 160).

12. Switch according to one of Claims 1 to 11, **characterized in that** a secondary tongue (160) has an L-shaped lateral control endplate (162).

13. Switch according to one of Claims 1 to 12, **characterized in that** the control lever (10) has at least one cam (16, 18) able to act on an associated secondary tongue (150, 160).

14. Switch according to one of Claims 1 to 13, **characterized in that** the lever (10) has two control cams (16, 18) respectively able to act on one of the two secondary tongues (150, 160).

## Patentansprüche

1. Elektrischer Schalter, der eine Gruppe von elektrisch leitenden Bahnen (202, 204, 206, 208), die von einem gemeinsamen Träger (200) getragen werden, und ein Kontaktbauteil (100) aufweist, das mindestens eine Hauptlasche (130, 140) aufweist, die permanent auf dem Träger ruhen kann, um den Schritt der Verbindung der von diesem getragenen elektrisch leitenden Bahnen (202, 204) zu verändern, wenn das Bauteil in Verschiebung in einer allgemein parallel zum Träger (200) liegenden Ebene beaufschlagt wird, **dadurch gekennzeichnet, dass** das Kontaktbauteil (100) außerdem mindestens eine sekundäre Lasche (150, 160) aufweist, die sich in einer anderen Ebene als die Hauptlasche (130, 140) befindet und geeignet ist, um mit einer Bahn (206, 208) in Kontakt gebracht zu werden, die vom Träger (200) getragen wird, wenn das Bauteil (100) in einer Ebene allgemein lotrecht zum Träger (200) beaufschlagt wird.

2. Schalter nach Anspruch 1, **dadurch gekennzeichnet, dass** er einen Stellhebel (10), der um zwei orthogonale Achsen (12, 14) schwenken kann, und ein Steuerbauteil (20) aufweist, das von dem Stellhebel (10) getragen wird, das selbst das Kontaktbauteil (100) trägt, und das mit dem Stellhebel (10) bei dessen Drehung um eine Achse (12) verbunden ist, wobei es einen Winkelausschlag bezüglich des Stellhebels (10) bei dessen Drehung um eine zweite orthogonale Achse (14) haben kann.

3. Schalter nach Anspruch 2, **dadurch gekennzeichnet, dass** das Steuerbauteil (20) aus thermoplastischem Werkstoff hergestellt ist.

4. Schalter nach einem der Ansprüche 1 bis 3, **dadurch gekennzeichnet, dass** das Kontaktbauteil (100) aus einem Stück besteht und durch Ausschneiden und Umbiegen eines Metallplättchens hergestellt wird.

5. Schalter nach einem der Ansprüche 1 bis 4, **dadurch gekennzeichnet, dass** das Kontaktbauteil (100) eine Platine (110) besitzt, die Versteifungsrippen (112, 114, 116) aufweist.

6. Schalter nach einem der Ansprüche 1 bis 5, **dadurch gekennzeichnet, dass** er zwei Hauptlaschen (130, 140) aufweist.

7. Schalter nach einem der Ansprüche 1 bis 6, **dadurch gekennzeichnet, dass** er mindestens eine Hauptlasche (130, 140) aufweist, deren Mittelebene bezüglich einer Basisplatine des Kontaktbauteils (100) geneigt ist.

8. Schalter nach einem der Ansprüche 1 bis 7, **dadurch gekennzeichnet, dass** jede Lasche (130, 140, 150, 160) in einem Kontaktlappen (131, 141, 151, 161) endet, der von einer Kugelkalotte gebildet wird.

9. Schalter nach einem der Ansprüche 1 bis 8, **dadurch gekennzeichnet, dass** er zwei sekundäre Laschen (150, 160) aufweist.

10. Schalter nach einem der Ansprüche 1 bis 9, **dadurch gekennzeichnet, dass** jede sekundäre Lasche (150, 160) einen seitlichen Steuerflansch (154, 162) besitzt.

11. Schalter nach Anspruch 10, **dadurch gekennzeichnet, dass** die seitlichen Steuerflansche durch Umbiegen eines auf einen Längsrand jeder sekundären Lasche (150, 160) aufgesetzten Bauteils geformt werden.

12. Schalter nach einem der Ansprüche 1 bis 11, **dadurch gekennzeichnet, dass** eine sekundäre Lasche (160) einen L-förmigen seitlichen Steuerflansch (162) aufweist.

13. Schalter nach einem der Ansprüche 1 bis 12, **dadurch gekennzeichnet, dass** der Stellhebel (10) mindestens einen Nocken (16, 18) aufweist, der eine zugeordnete sekundäre Lasche (150, 160) beaufschlagen kann.

14. Schalter nach einem der Ansprüche 1 bis 13, **dadurch gekennzeichnet, dass** der Stellhebel (10) zwei Steuernocken (16, 18) besitzt, die je eine der zwei sekundären Laschen (150, 160) beaufschlagen können.
